(19) **Europäisches Patentamt**
**European Patent Office**
**Office européen des brevets**

(11) **EP 2 064 532 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **07817506.4**

(22) Anmeldetag: **13.09.2007**

(51) Int Cl.:
***G01L 17/00*** *(2006.01)*

(86) Internationale Anmeldenummer:
**PCT/DE2007/001633**

(87) Internationale Veröffentlichungsnummer:
**WO 2008/034411 (27.03.2008 Gazette 2008/13)**

(54) **SYSTEM ZUM FESTSTELLEN DES DRUCKES IN EINEM FAHRZEUGREIFEN UND/ODER DER GESCHWINDIGKEIT DES FAHRZEUGES**

SYSTEM FOR DETECTING THE PRESSURE IN A VEHICLE TYRE AND/OR SPEED OF THE VEHICLE

SYSTÈME POUR DÉTERMINER LA PRESSION DANS UN PNEUMATIQUE DE VÉHICULE ET/OU LA VITESSE DU VÉHICULE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.09.2006 DE 102006044585**

(43) Veröffentlichungstag der Anmeldung:
**03.06.2009 Patentblatt 2009/23**

(73) Patentinhaber: **Ventech GmbH**
**45768 Marl (DE)**

(72) Erfinder:
• **PINGEL, Ulrich**
**45770 Marl (DE)**
• **PINGEL, Martin**
**45770 Marl (DE)**

(74) Vertreter: **Tönhardt, Marion**
**Forrester & Boehmert**
**Pettenkoferstrasse 20-22**
**80366 München (DE)**

(56) Entgegenhaltungen:
EP-A- 0 656 269     WO-A-00/11442
WO-A-2006/003467    DE-U1- 20 200 489
US-A1- 2006 123 897

**Beschreibung**

Die Erfindung betrifft ein System zum Feststellen des Druckes in einem pneumatischen Fahrzeugreifen, der an einem Fahrzeug angebracht ist, und/oder der Geschwindigkeit des Fahrzeuges, mit einer Anordnung aus Lastsensoren, die Kraftsignale für ein zweidimensionales Muster der Kraftverteilung liefert, die von dem Fahrzeugreifen in Kontakt mit den Sensoren ausgeübt wird, wenn sich das Fahrzeug über die Anordnung bewegt, mit einem Computer, der so programmiert ist, daß er den Reifendruck und/oder die Geschwindigkeit aus der Kraftverteilung unabhängig von der Herstellungsart oder dem Modell des Rades und des Fahrzeuges bestimmt; und einer Einrichtung zum Anzeigen des Druckes und/oder der Geschwindigkeit

Ein derartiges System zum Feststellen des Druckes in einem pneumatischen Fahrzeugreifen ist aus der US 5 396 bekannt. Hier wird eine Zeilenanordnung von Kraftsensoren beschrieben, über die der Fahrzeugreifen rollt. Die Geschwindigkeit kann dabei aus dem Signalanstieg und dem Signalabfall bestimmt werden, während der Reifen über die Lastsensoranordnung läuft. allerdings hängt die Messung der Geschwindigkeit über die Steigung der Flanken des Signals vom Reifendruck ab und wird durch Profileinflüsse sehr ungenau.

Die WO 00/11442 offenbart eine Vorrichtung und eine Methode zur Messung des Reifendrucks, wobei diese Vorrichtung am Rad des Fahrzeugs befestigt ist und wobei das Rad über eine Kontaktfläche mit dem Untergrund in Verbindung steht, und wobei die Vorrichtung einen oder mehrere Sensoren innerhalb des Untergrunds aufweist, wobei jeder Sensor darauf ausgerichtet ist, den mittleren Auflagedruck über den Sensor zwischen dem Reifen und dem Untergrund zu messen, und wobei die Vorrichtung darüber hinaus ein Weiterverarbeitungsmittel zur Bestimmung des durchschnittlichen Auflagedruckes zwischen dem Reifen und dem Untergrund aus dem Signal eines einzigen Sensors oder denen mehrerer Sensoren innerhalb der Kontaktfläche aufweist, um in erster Näherung eine Messung des Reifenfülldrucks bereitzustellen.

Die WO 2006/003467 A offenbart ein System zur Überprüfung eines Fahrzeugreifens und zur Beurteilung des Profils eines Fahrzeugreifens, zur Messung des Reifendruckes, und um weitere Parameter, wie das Fahrzeuggewicht, zu bestimmen. Dabei wird eine Abfolge von Meßwerten dazu herangezogen, um Daten bezüglich des gesamten Radabdrucks zu erlagen, wobei die Meßelemente darauf ausgelegt sind, die Beschaffenheit der Profilbedeckung des Reifens zu ermitteln. Dazu weisen die Sensoren nachgiebige Abschnitte auf, welche in das Reifenprofil eindringen, um auf diese Weise beispielsweise eine unzureichende Profiltiefe anzuzeigen.

Die US 2006/0123897 bezieht sich auf ein Verfahren zur Messung von zumindest einer charakteristischen Größe eines pneumatischen Fahrzeugreifens unter Zuhilfenahme von deformierbaren Sensoren, wobei ein elektrisches Signal in Abhängigkeit der Deformationsgeschwindigkeit jedes Sensors ermittelt wird. Aus dem ermittelten elektrischen Signal wird die zumindest eine charakteristische Größe des Reifens bestimmt, wobei die Verformung des deformierbaren Sensors in zwei senkrecht zueinander stehenden Richtungen ermittelt wird, und wobei sich die Ausrichtung zweier Sensorabmessungen sowohl an der Bewegungsrichtung als auch an einer Abmessung des Reifens orientiert. Damit können beispielsweise die Reifenstandfläche, oder auch die Druckverteilung des Reifens über die Reifenstandfläche bestimmt werden.

Störende Effekte des Reifenprofils können hierbei jedoch nicht berücksichtigt werden. Insbesondere der Signalanstieg wird durch Querprofilierung der Reifen, zum Beispiel Querrillen oder schräg verlaufende Profilrillen, wesentlich verändert, und es ist davon auszugehen, daß der Signalanstieg nicht mehr linear verläuft.

Es ist daher eine Aufgabe der vorliegenden Erfindung, ein System zum Feststellen des Drukkes in einem pneumatischen Fahrzeugreifen und/oder der Geschwindigkeit eines Fahrzeuges zur Verfügung zu stellen, bei dem die Einflüsse des Reifenprofils soweit als möglich reduziert werden.

Diese Aufgabe wird durch ein System mit den Merkmalen des Anspruchs 1 gelöst. Vorteilhafte Ausgestaltungen sind Gegenstand der Unteransprüche.

Das erfindungsgemäße System zum Feststellen des Druckes in einem pneumatischen Fahrzeugreifen, der an einem Fahrzeug angebracht ist, und/oder der Geschwindigkeit des Fahrzeuges umfaßt eine Anordnung aus Lastsensoren, die Kraftsignale für ein zweidimensionales Muster der Kraftverteilung liefert, die von dem Fahrzeugreifen in Kontakt mit den Lastsensoren ausgeübt wird, wenn sich das Fahrzeug über die Anordnung bewegt; einen Computer, der so programmiert ist, daß er den Reifendruck und/oder die Geschwindigkeit aus der Kraftverteilung unabhängig von der Herstellungsart oder dem Modell des Reifens und des Fahrzeugs bestimmt; einer Einrichtung zum Anzeigen des Druckes und/oder der Geschwindigkeit; und ist dadurch gekennzeichnet, daß die Anordnung aus Lastsensoren mindestens zwei Reihen von Lastsensoren umfaßt, die in Fahrtrichtung hintereinander angeordnet sind, wobei zumindest eine Reihe der Lastsensoren gegen eine oder mehrere Reihen der Lastsensoren um einen vorbestimmten Betrag quer zur Fahrtrichtung versetzt sind.

Der vorbestimmte Betrag sollte kleiner als die Abmessung eines Lastsensors quer zur Fahrtrichtung sein. Im allgemeinen werden in einer Reihe baugleiche Lastsensoren verwendet.

Ferner kann vorgesehen sein, daß bei zumindest einer der Reihen der Lastsensoren die Länge der Lastsensoren größer ist als bei zumindest einer weiteren Reihe der Lastsensoren. Dabei mildert ein kurzer Lastsensor den Kompensationsaufwand, der betrieben werden muß, wenn ein hoher Reifendruck bei gleichzeitig geringer Last vorliegt. Mit einem langen Sensor werden die Querrillen besser ausgemittelt.

Insgesamt ist es vorteilhaft, mehrere Reihen mit relativ kurzen Lastsensoren vorzusehen, obwohl sich dadurch die Anzahl der erforderlichen Lastsensoren erhöht und die Kosten ansteigen. Man erhält allerdings auch mehr auswertbare Information.

Das erfindungsgemäße Meßprinzip ist physikalisch gesehen ein Kompromiß zwischen einer möglichst langen Sensorfläche, die wünschenswert ist, da sie Profileinflüsse minimiert, und einer möglichst kurzen Sensorfläche. Die Auflagelänge des Reifens in Längsrichtung bei hohem Luftdruck und geringer Last ist nur sehr kurz. Eine geringere Auflagelänge als die Länge der Sensorfläche führt, wenn keine zusätzliche Kompensation vorgenommen wird, zu erheblichen Fehlmessungen. Dies limitiert den Bereich für die Sensorlänge erheblich.

Die einzelnen Sensorflächen sollten so eng wie möglich aneinanderliegen, vorzugsweise sowohl in Fahrtrichtung als auch quer dazu dicht an dicht.

Durch das versetzte Anordnen der Sensorelemente können die einzelnen Sensorflächen auch breiter ausgestaltet werden als der eigentliche Sensorabstand quer zur Fahrtrichtung, ohne jedoch die Ortsauflösung wesentlich zu reduzieren.

Insgesamt lassen sich die störenden Einflüsse von Längsrillen des Profils zuverlässig minimieren, da der von den Längsrillen hervorgerufene Effekt herausgemittelt werden kann. Dazu ist eine flächige Abdeckung mit Lastsensoren optimal, da dann eine Längsrille jedenfalls erfaßt wird.

Vorteilhaft ist eine Recheneinheit vorgesehen, die für Signale von einer ersten Reihe der Lastsensoren und für Signale von einer zweiten Reihe der Lastsensoren jeweils den Schwerpunkt gemäß

$$p_t = \frac{\sum (I_p \cdot p)}{\sum I_p}$$

berechnet, wobei $I_p$ die Intensität am Ort $p$ ist und wobei der Schwerpunkt $p_t$ zum Zeitpunkt t durchfahren wurde, und aus der Differenz von Schwerpunkt $P_{t2}$ der zweiten Reihe der Lastsensoren und Schwerpunkt $P_{t1}$ der ersten Reihe der Lastsensoren die Geschwindigkeit v gemäß

$$v = \frac{p_{t2} - p_{t1}}{t_2 - t_1}$$

ermittelt. Aus der Zeitdifferenz der Signale der beiden Reihen lassen sich nun die Geschwindigkeit des Fahrzeuges und seine Beschleunigung so sehr genau rechnen.

Dabei ist bevorzugt, daß die Lastsensoren parallel oder quasi-parallel gelesen werden. Bei der quasi-parallelen Methode geschieht das Einlesen der Daten so schnell, daß keine nennenswerten Verzögerungen oder Meßfehler entstehen, oder es werden entsprechende Korrekturmaßnahmen getroffen.

Die genaue Auflagelänge des Reifens auf jeder Sensorlänge kann unter Nutzung der Geschwindigkeitsinformation berechnet werden, indem das Kraftsignal in Längeneinheiten umgerechnet wird und die Sensorlänge subtrahiert wird. Für den Fall, daß die Auflagelänge kleiner ist als die Sensorlänge oder in den Bereich der Sensorlänge kommt, wird zweckmäßigerweise eine Kompensationsrechnung durchgeführt. Dabei reicht in vielen Fällen eine lineare Kompensation aus.

Es sollte angemerkt werden, daß die Geschwindigkeitsmessung zur Bestimmung des Reifendrucks nicht unbedingt nötig ist. Sie kann auch eigenständig durchgeführt werden. Bei der erfindungsgemäßen Vorgehensweise zur Bestimmung der Geschwindigkeit reduzieren sich die Einflüsse von Profil, Spur und Sturz.

Durch differentielle Betrachtung insbesondere der ansteigenden Flanke der Signale werden Profileffekte sichtbar und können berücksichtigt werden.

Insbesondere die Profiltiefe hinterläßt bei dem typischen, konischen Profileinschnitt ein charakteristisches Signal. Bei großer Profiltiefe sind die Profilrillen sehr tief und breit und hinterlassen hohe Signalpegel in Quer- als auch Längsrichtung. Mit sinkender Profiltiefe wird auch die Profilrille schmaler, welches die Signalamplitude reduziert. Hieraus läßt sich die Profiltiefe einfach ableiten. Somit ist vorgesehen, daß unter Verwendung der Amplitude der Kraftsignale in Fahrtrichtung und/oder quer zur Fahrtrichtung eine Recheneinheit die Profiltiefe des Reifens bestimmt.

Eine zusätzliche Funktionalität des Systems ist die Gewichtsmessung des Fahrzeuges. Die Last, die jeder einzelne Reifen zu tragen hat, kann durch die Integration der gemessenen Reifendrücke über die Fahrstrecke und Breite des Reifens ermittelt werden. Das Achsgewicht oder das Gesamtgewicht des Fahrzeugs wird durch Aufaddierung der Lasten der einzelnen Reifen der Achse oder des Fahrzeuges ermittelt.

Eine einfache Installationsart ist für das System die direkte Aufbringung auf der Fahrbahnoberfläche, meist geschützt durch eine Auf- und Abfahrrampe. Diese Montageweise ist einfach und schnell durchzuführen, besitzt jedoch Nachteile, die durch die vertikale Beschleunigung der Achse hervorgerufen werden. Insbesondere treten hierbei sprunghafte Laständerungen oder ein teilweise Überspringen des Sensors auf und führen - neben erhöhter Belastung und Verschleiß der Sensorplatten - zu erhöhten Meßabweichungen.

Besonders hohe Genauigkeit und eine Minimierung der Belastung des Meßsystems erreicht man dadurch, daß man die Sensorplatten bündig so in den Boden einläßt, so daß die Fahrzeugachse keine durch eine Rampe o. ä. hervorgerufene vertikale Bewegung ausführen muß und es zu keinen störenden Schwingungen des Reifens oder der Achse kommt.

Im folgenden soll die Erfindung anhand der beigefügten Zeichnung näher erläutert werden. Es zeigt:

Figur 1     ein erstes Beispiel einer Anordnung von Lastsensoren, bei denen Lastsensoren einer ersten Reihe zu den Lastsensoren einer zweiten Reihe in Fahrtrichtung A ei- nes Fahrzeuges zueinander versetzt sind;

Figur 2     ein zweites Beispiel einer Anordnung von Lastsensoren; und

Figur 3     ein drittes Beispiel einer Anordnung von Lastsensoren; und

Figur 4     ein viertes Beispiel einer Anordnung von Lastsensoren.

Die Fahrtrichtung ist in der Zeichnungsfigur dabei durch den Pfeil A angegeben. Eine erste Reihe 10 von Lastsensoren, z.B. 1, 3, 5, ... ist gegenüber einer zweiten Reihe 20 von Lastsensoren, z.B. 2, 4, 6, ... um einen Betrag x quer zur Fahrtrichtung versetzt. Der durch die Geschwindigkeit des Fahrzeuges erzeugte Zeitversatz beim Auftreffen des Reifens auf die beiden Reihen 10, 20 ermöglicht somit die Erfassung eben dieser Geschwindigkeit. Der Vorteil liegt darin, daß man nur die Anzahl Sensoren benötigt, die im Stand der Technik in einer Reihe verwendet werden, jedoch zusätzlich noch der Vorteil der Geschwindigkeitsinformation hinzukommt. Dabei sind die Lastsensoren nicht elektrisch seriell geschaltet, sondern parallel oder werden zumindest datentechnisch parallel ausgelesen.

Die Sensorflächen müssen einen Abstand zueinander einhalten, damit sie sich nicht gegenseitig überlappen. Somit bleiben zwischen den Sensorflächen schmale Spalte ungemessen.

Die versetzte Anordnung erlaubt die Vergrößerung bzw. Verbreiterung der einzelnen Sensorflächen bis zum Doppelten des Abstandes zwischen den Lastsensoren. Hierdurch kann der störende Einfluß des Reifenprofils ohne wesentliche Auflösungsverluste wesentlich reduziert werden.

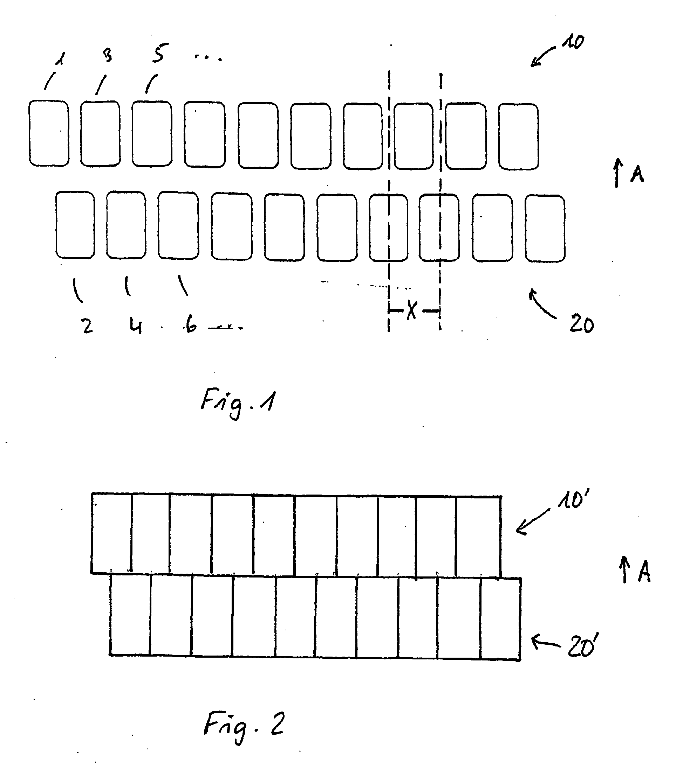

Figur 2 zeigt ein Beispiel einer Anordnung aus zwei Reihen 10', 20' von Lastsensoren, die sowohl in Fahrtrichtung A als auch quer dazu dicht an dicht angeordnet sind. Somit werden die schmalen Spalte, die bei der Ausführungsform nach Figur 1 vorliegen, vollständig vermieden, und der Einfluß von Längsrillen kann erfaßt und gegebenenfalls kompensiert werden.

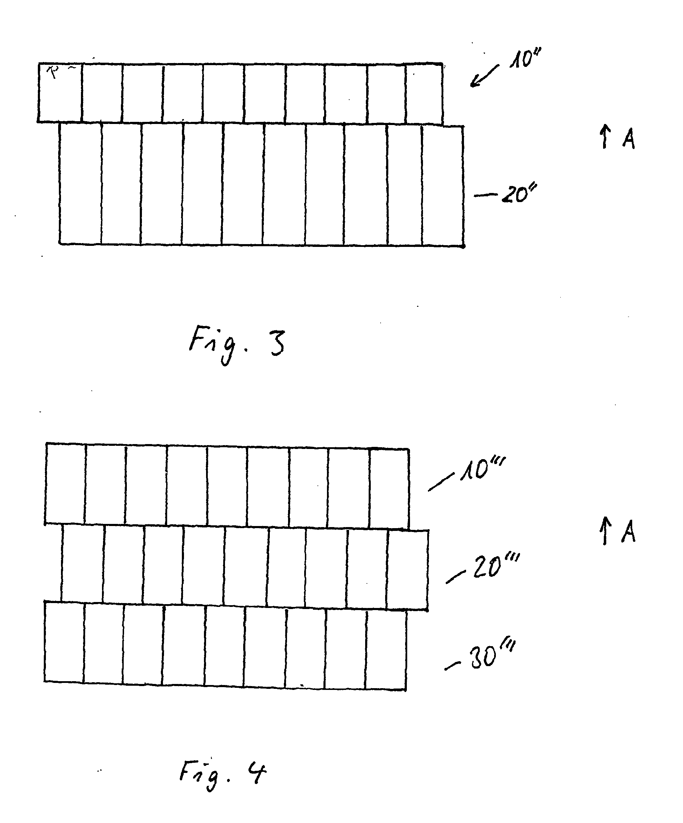

Figur 3 zeigt ein Beispiel einer Anordnung von Lastsensoren, bei der eine erste Reihe 10" der Lastsensoren und eine zweite Reihe 20" der Lastsensoren unterschiedliche Sensorlängen in Fahrtrichtung haben. Hierdurch kann der Profileinfluß stark reduziert werden, andererseits kann die tatsächliche Auflagelänge eines Reifens mit geringer Last und hohem Druck genau bestimmt werden.

Figur 4 zeigt ein Beispiel einer Anordnung von Lastsensoren, bei der drei Reihen 10''', 20''', 30''' von Lastsensoren mit gleicher Sensorlänge angeordnet sind. Es ist unbedingt vorteilhaft, zwei oder mehr Reihen aus Lastsensoren vorzusehen. Durch die redundante Information, die damit erlangt wird, wird das Ergebnis sicherer. Die Anordnung würde dann allerdings entsprechend teurer.

Weitere Abänderungen der Anordnungen von Lastsensoren sind möglich. Wenn hier redundante Information erforderlich ist, können auch vier oder mehr Reihen von Lastsensoren vorgesehen sein, wobei die Sensorlängen in den einzelnen Reihen gleich oder unterschiedlich sein können. In den Zeichnungen ist lediglich dargestellt, daß zwei Reihen um eine halbe Sensorbreite voneinander versetzt sind. Auch andere Versetzungen sind möglich, beispielsweise um ¼ der Sensorbreite oder irgendeinen anderen Bruchteil von dieser.

**Patentansprüche**

1. System zum Feststellen des Druckes in einem pneumatischen Fahrzeugreifen, der an einem Fahrzeug angebracht ist, und/oder der Geschwindigkeit des Fahrzeuges, mit:

   einer Anordnung aus Lastsensoren (1, 2, 3 ...), die Kraftsignale für ein zweidimensionales Muster der Kraftverteilung liefert, die von dem Fahrzeugreifen in Kontakt mit den Sensoren ausgeübt wird, wenn sich das Fahrzeug über die Anordnung bewegt;
   einem Computer, der so programmiert ist, daß er den Reifendruck und/oder die Geschwindigkeit aus der Kraftverteilung unabhängig von der Herstellungsart oder dem Modell des Reifens und des Fahrzeugs bestimmt; und
   einer Einrichtung zum Anzeigen des Druckes und/oder der Geschwindigkeit;
   **dadurch gekennzeichnet, daß**
   die Anordnung aus Lastsensoren mindestens zwei Reihen (10, 20) von Lastsensoren umfaßt, die in Fahrtrichtung hintereinander angeordnet sind, wobei zumindest eine Reihe der Lastsensoren gegen eine oder mehrere Reihen der Lastsensoren um einen vorbestimmten Betrag (x) quer zur Fahrtrichtung versetzt sind, und eine-Recheneinheit eine differentielle Analyse der ansteigenden Flanke der Kraftsignale durchführt, um Profileffekte des Reifens zu erkennen und zu kompensieren.

2. System nach Anspruch 1, **dadurch gekennzeichnet, daß** der vorbestimmte Betrag (x) kleiner als die Abmessung eines Lastsensors quer zur Fahrtrichtung ist.

**3.** System nach Anspruch 1, **dadurch gekennzeichnet, daß** bei zumindest einer der Reihen (10, 20) der Lastsensoren (1, 2, 3 ...) die Länge der Lastsensoren (1, 2, 3 ...) größer ist als bei zumindest einer weiteren Reihe (10, 20) der Lastsensoren (1, 2, 3 ...).

**4.** System nach Anspruch 1, **dadurch gekennzeichnet, daß** die Lastsensoren (1, 2, 3 ...) parallel oder quasi-parallel gelesen werden.

**5.** System nach Anspruch 1, **dadurch gekennzeichnet, daß** eine Recheneinheit vorgesehen ist, die das von den Lastsensoren (1, 2, 3....) erzeugte Kraftsignal in Längeneinheiten umrechnet und die genaue Auflagelänge des Reifens auf der Fläche jedes der Lastsensoren (1, 2, 3 ...) aus der Länge des Kraftsignals abzüglich der Länge des entsprechenden Lastsensors (1, 2, 3 ...) berechnet.

**6.** System nach Anspruch 1, **dadurch gekennzeichnet, daß** eine Recheneinheit vorgesehen ist, die für Signale von einer ersten Reihe (10, 20) der Lastsensoren (1, 2, 3 ...) und für Signale von einer zweiten Reihe (10, 20) der Lastsensoren (1, 2, 3 ...) jeweils den Schwerpunkt gemäß

$$p_t = \frac{\sum (I_p \cdot p)}{\sum I_p}$$

berechnet, wobei $I_p$ die Intensität am Ort p ist und wobei der Schwerpunkt $p_t$ zum Zeitpunkt t durchfahren wurde, und aus der Differenz von Schwerpunkt $p_{t2}$ der zweiten Reihe (10, 20) der Lastsensoren (1, 2, 3 ...) und Schwerpunkt $p_{t1}$ der ersten Reihe (10, 20) der Lastsensoren (1, 2, 3 ...) die Geschwindigkeit v gemäß

$$v = \frac{p_{t2} - p_{t1}}{t_2 - t_1}$$

ermittelt.

**7.** System nach einem der Ansprüche 1 bis 6, **dadurch gekennzeichnet, daß** für den Fall, daß die Auflagelänge des Reifens kleiner ist als die Länge eines oder mehrerer der Lastsensoren (1, 2, 3 ...), eine Kompensationsrechnung durchgeführt wird.

**8.** System nach einem der Ansprüche 1 bis 7, **dadurch gekennzeichnet, daß** unter Verwendung der Amplitude der Kraftsignale in Fahrtrichtung und/oder quer zur Fahrtrichtung eine Recheneinheit die Profiltiefe des Reifens bestimmt.

**Claims**

**1.** System for the determination of the pressure in a pneumatic vehicle tire which is mounted on a vehicle and/or the speed of the vehicle, with:

an array of load sensors (1, 2, 3 ...) which supplies force signals for a two-dimensional pattern of the distribution of force which is exerted by the vehicle tire in contact with the sensors when the vehicle moves over the array;
a computer which is programmed so that it determines the tire pressure and/or the speed on the basis of the distribution of force independently of the method of manufacture or the model of the tire and or the vehicle; and
a device for displaying the pressure and/or the speed;
**characterized in that**
the array comprises load sensors in at least two rows (10, 20) of load sensors which are arranged one behind the other in the direction of travel, whereby at least one row of load sensors is offset with respect to one or more rows of load sensors by a predetermined amount (x) transverse to the direction of travel, and
a computer unit performs a differential analysis of the leading edge of the force signals so as to recognize and to compensate for tread effects of the fire.

**2.** System as recited in Claim 1, **characterized in that** the predetermined amount (x) is smaller than the dimension of a load sensor in the direction transverse to the direction of travel.

**3.** System as recited in Claim 1, **characterized in that** in at least one of the rows (10, 20) of load sensors (1, 2, 3 etc.), the length of the load sensors (1, 2, 3 etc.) is greater than in at least one other row (10, 20) of load sensors (1, 2, 3 etc.).

**4.** System as recited in Claim 1, **characterized in that** the load sensors (1, 2, 3 etc.) are read simultaneously or quasi-simultaneously.

**5.** System as recited in Claim 1, **characterized in that** a computer unit is provided which converts the force signal generated by the load sensors (1, 2, 3 etc.) into length units and calculates the exact contact length of the tire on the surface of each of the load sensors (1, 2, 3 etc.) from the length of the force signal minus the length of the corresponding load sensor (1, 2, 3 etc.)..

**6.** System as recited in Claim 1, **characterized in that** a computer unit is provided which calculates the respective center of gravity for signals from a first row (10, 20) of load sensors (1, 2, 3 etc.) and for signals from a second row (10, 20) of load sensors (1, 2, 3 etc.) according to

$$p = \frac{\sum(I_p \cdot p)}{\sum I_p}$$

whereby $I_p$ is the intensity at the location p and whereby the center of gravity $p_t$ was traversed at time t, and from the difference of the center of gravity $p_{t2}$ of the second row (10, 20) of load sensors (1, 2, 3 etc.) and the center of gravity $p_{t1}$ of the first row (10, 20) of load sensors (1, 2, 3 etc.), the speed v is determined according to

$$v = \frac{p_{t2} - p_{t1}}{t_2 - t_1}$$

**7.** System as recited in one of the Claims 1 to 6, **characterized in that**, if the contact length of the tire is less than the length of one or more of the load sensors (1, 2, 3 etc.), a compensation calculation is performed.

**8.** System as recited in one of the Claims 1 to 7, **characterized in that** a computer unit determines the tread depth of the tire using the amplitude of the force signals in the direction of travel and/or transverse to the direction of travel.

**Revendications**

**1.** Système pour déterminer la pression dans un pneumatique de véhicule, ledit pneumatique étant monté sur un véhicule, et/ou la vitesse du véhicule, comprenant :

un agencement de capteurs de charge (1, 2, 3 ...) qui fournit des signaux de force pour un modèle bidimensionnel de la distribution de la force qui est exercée par le pneumatique de véhicule en contact avec les capteurs lorsque le véhicule passe par-dessus l'agencement ; un ordinateur qui est programmé de telle sorte qu'il détermine la pression de gonflage et/ou la vitesse à partir de la distribution de force indépendamment du mode de fabrication ou du type de pneumatique et de véhicule ; et un dispositif pour afficher la pression et/ou la vitesse; **caractérisé en ce que** l'agencement de capteurs de charge comprend au moins deux rangées (10, 20) de capteurs de charge qui sont disposés les uns après les autres dans le sens de la marche, au moins une rangée des capteurs de charge étant décalée d'une quantité prédéterminée (x) transversalement par rapport au sens de la marche par rapport à une ou plusieurs rangées des capteurs de charge, et une unité de calcul effectue une analyse différentielle du flanc montant des signaux de force afin de reconnaître et de compenser des effets de sculpture du pneumatique.

**2.** Système selon la revendication 1, **caractérisé en ce que** la quantité prédéterminée (x) est inférieure à la dimension d'un capteur de charge transversalement par rapport au sens de la marche.

**3.** Système selon la revendication 1, **caractérisé en ce que** dans au moins l'une des rangées (10, 20) des capteurs de charge (1, 2, 3 ...), la longueur des capteurs de charge (1, 2, 3 ...) est supérieure à celle des capteurs de charge (1, 2, 3 ...) dans au moins une autre rangée (10, 20).

**4.** Système selon la revendication 1, **caractérisé en ce que** les capteurs de charge (1, 2, 3 ...) sont lus en parallèle ou presque en parallèle.

**5.** Système selon la revendication 1, **caractérisé en ce qu'**il comprend une unité de calcul qui convertit le signal de force généré par les capteurs de charge (1, 2, 3 ...) en unités de longueur et calcule la longueur d'appui exacte du pneumatique sur la surface de chacun des capteurs de charge (1, 2, 3 ...) à partir de la longueur du signal de force moins la longueur du capteur de charge correspondant (1, 2, 3 ...).

**6.** Système selon la revendication 1, **caractérisé en ce qu'**il comprend une unité de calcul qui calcule pour des signaux provenant d'une première rangée (10, 20) des capteurs de charge (1, 2, 3 ...) et pour des signaux provenant d'une deuxième rangée (10, 20) des capteurs de charge (1, 2, 3 ...) respectivement le barycentre selon

$$p_t = \frac{\sum(I_p \cdot p)}{\sum I_p}$$

$I_p$ étant l'intensité à l'endroit p et le barycentre $p_t$ a été passé à l'instant t, et qui détermine à partir de la différence entre le barycentre $p_{t2}$ de la deuxième rangée (10, 20) des capteurs de charge (1, 2, 3 ...) et le barycentre $p_{t1}$ de la première rangée (10, 20) des capteurs de charge (1, 2, 3 ...) la vitesse $v$ selon

$$v = \frac{p_{t2} - p_{t1}}{t_2 - t_1}$$

7. Système selon l'une quelconque des revendications 1 à 6, **caractérisé en ce qu'**au cas où la longueur d'appui du pneumatique serait inférieure à la longueur d'un ou de plusieurs capteurs de charge (1, 2, 3 ...), un calcul de compensation est effectué.

8. Système selon l'une quelconque des revendications 1 à 7, **caractérisé en ce qu'**en utilisant l'amplitude des signaux de force dans le sens de la marche et/ou transversalement au sens de la marche, une unité de calcul détermine la profondeur de sculpture du pneumatique.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5396 A
- WO 0011442 A

- WO 2006003467 A
- US 20060123897 A